# EUROPEAN PATENT APPLICATION

(11) **EP 4 808 069 A1**
(43) Date of publication of application: **16.09.2026**
(21) Application number: 25163646.0
(22) Date of filing: 13.03.2025
(51) Int. Cl.: H04L 45/16, H04L 45/00, H04L 49/201, H04L 49/20, H04L 49/351

(54) **AN APPARATUS, A METHOD AND A DATA STRUCTURE FOR REPLICATING A PACKET FOR PACKET SWITCHING**

(71) Applicant: Nokia Solutions and Networks Oy, 02610 Espoo (FI)
(72) Inventor: KCHAOU, Ilyes, 2018 Antwerp (BE); DAVIDSON, Tom, 2018 Antwerp (BE); VAN PETEGHEM, Tom, 2018 Antwerp (BE)
(74) Representative: DREISS Patentanwälte PartG mbB

(57) **Abstract**

A method, an apparatus (104) and a data structure for replicating a packet for packet switching, wherein the apparatus (104) comprises a means for providing a list (202-1) comprising egress interfaces, a means for receiving the packet, a means for receiving information indicative of a subset of egress interfaces from the list (202-1), and a means for, according to the received information, replicating the packet for the egress interfaces in the subset.

## Description

### Field of the invention

Various examples relate to apparatuses and methods for replicating a packet for packet switching.

### Background

Layer 2 switches are network devices of a packet switched network capable of receiving and sending packets. A switch is configured for receiving a packet, which needs to be sent to multiple interfaces, to replicate the packet, i.e., create the necessary number of copies of the packet, and send the replicated packets, i.e., the copies, to the corresponding interface.

### Summary

Some examples relate to an apparatus for replicating a packet for packet switching, wherein the apparatus comprises a means for providing a list comprising egress interfaces, a means for receiving the packet, a means for receiving information indicative of a subset of egress interfaces from the list, and a means for, according to the received information, replicating the packet for the egress interfaces in the subset.

In some examples, the list associates the egress interfaces in the list with a respective egress interface identification, wherein the apparatus comprises a means for receiving an ingress interface identification, and a means for inhibiting replicating the packet for the egress interface associated in the list with the egress interface identification matching the ingress interface identification.

In some examples, the apparatus comprises a means for receiving an indication to inhibit sending of a copy of the packet to the source of the packet, and a means for, upon receipt of the indication, inhibiting replicating the packet or inhibiting searching in the list the egress interface identification matching the ingress interface identification.

In some examples, the apparatus comprises a means for receiving an indicator, wherein the indicator indicates for one egress interface, for that the received information indicates to replicate the packet, to stop processing the list.

In some examples, the apparatus comprises a means for sorting the list depending on the received indicator to determine a sorted list, wherein the sorted list comprises the egress interfaces of the list in an order, wherein the egress interfaces for that the received information indicates to replicate the packet are arranged at the beginning of the order, wherein the egress interface for that the indication indicates to stop processing is arranged in the order at the end of egress interfaces for that the received information indicates to replicate the packet followed in the order by the egress interfaces for that the received information indicates not to replicate the packet, wherein the means for replicating is configured for replicating the packet for the egress interfaces in the sorted list according to the order starting from the beginning and stopping after replicating the packet for that the indicator indicates to stop processing.

In some examples, the means for providing the list is configured for providing a plurality of lists associated with a respective list identifier, wherein the plurality of lists comprises the list, wherein the information comprises an identifier of the list, and wherein the apparatus comprises a means for selecting the list according to the identifier of the list from the plurality of lists.

Some examples relate to a method of replicating a packet for packet switching, wherein the method comprises providing a list comprising egress interfaces, receiving the packet, receiving information indicative of a subset of egress interfaces from the list, and, according to the received information, replicating the packet for the egress interfaces in the subset.

In some examples, the list associates the egress interfaces in the list with a respective egress interface identification, wherein the method comprises receiving an ingress interface identification, and inhibiting replicating the packet for the egress interface associated in the list with the egress interface identification matching the ingress interface identification.

In some examples, the method comprises receiving an indication to inhibit sending of a copy of the packet to the source of the packet, and, upon receipt of the indication, inhibiting replicating the packet or inhibiting searching in the list the egress interface identification matching the ingress interface identification.

In some examples, the method comprises receiving an indicator, wherein the indicator indicates for one egress interface, for that the received information indicates to replicate the packet, to stop processing the list.

In some examples, the method comprises sorting the list depending on the received indicator to determine a sorted list, wherein the sorted list comprises the egress interfaces of the list in an order, wherein the egress interfaces for that the received information indicates to replicate the packet are arranged at the beginning of the order, wherein the egress interface for that the indication indicates to stop processing is arranged in the order at the end of egress interfaces for that the received information indicates to replicate the packet followed in the order by the egress interfaces for that the received information indicates not to replicate the packet, wherein the method comprises replicating the packet for the egress interfaces in the sorted list according to the order starting from the beginning and stopping after replicating the packet for that the indicator indicates to stop processing.

In some examples, the method comprises providing a plurality of lists associated with a respective list identifier, wherein the plurality of lists comprises the list, wherein the information comprises an identifier of the list, and wherein the method comprises selecting the list according to the identifier of the list from the plurality of lists.

Some examples relate to a data structure for replicating a packet for packet switching, wherein the data structure comprises information indicative of a subset of egress interfaces from the list.

In some examples, the data structure comprises an indicator indicating for one egress interface, for that the information indicates to replicate the packet, to stop processing the list.

In some examples, the data structure comprises an ingress interface identification.

In some examples, the data structure comprises an indication indicating to inhibit sending of a copy of the packet to the source of the packet.

### Brief description of the figures

### Description of the embodiments

Fig. 1 schematically depicts an apparatus for packet switching,
Fig. 2 schematically depicts a part of the apparatus,
Fig. 3 schematically depicts a packet and meta data,
Fig. 4 depicts a flow chart comprising steps of a method of replicating a packet for packet switching.

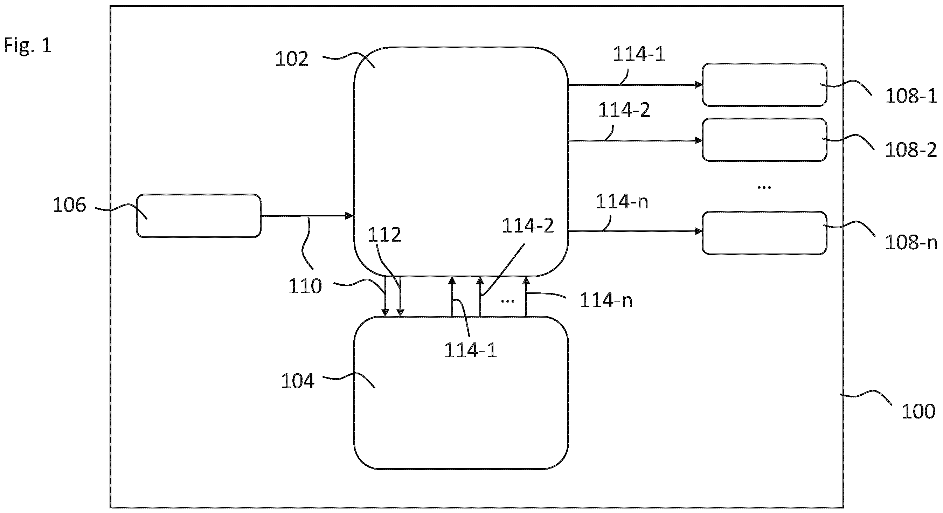

Figure 1 schematically depicts an apparatus for packet switching 100. An example for the apparatus for packet switching 100 is a layer 2 switch of a packet switched network according to the OSI model.

The apparatus for packet switching 100 comprises an apparatus for packet processing 102 and an apparatus for replicating packets 104.

The apparatus for packet switching 100 comprises a ingress interface 106 and egress interfaces 108-1, 108-2, ..., 108-n.

The ingress interface 106 is configured for receiving an ingress packet 110.

The apparatus for packet processing 102 is configured for providing the ingress packet 110 to the apparatus for replicating packets.

The apparatus for packet processing 102 is configured for providing meta data 112 for the ingress packet 110.

The apparatus for packet processing 102 is configured for providing the meta data 112 to the apparatus for replicating packets 104.

The apparatus for replicating packets 104 is configured for providing egress packets 114-1, 114-2, ..., 114-n for the egress interfaces 108-1, 108-2, ..., 108-n.

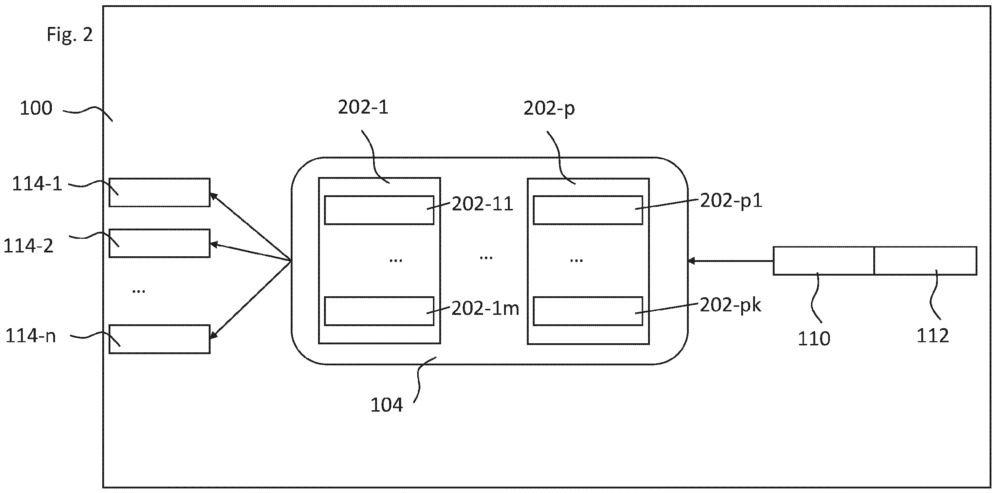

Figure 2 schematically depicts a part of the apparatus for packet switching 100 comprising the apparatus for replicating packets 104.

The apparatus for replicating packets 104 comprises lists 202-1, ..., 202-p. The lists 202-1, ..., 202-p comprise entries 202-1, ..., 202-1m, ..., 202-p1, ..., 202-pk.

Figure 2 depicts entries 202-11, ..., 202-1m of an exemplary first list 202-1. Figure 2 depicts entries 202-p1, ..., 202-pk of an exemplary p-th list 202-p.

The apparatus for replicating packets 104 may comprise a single list.

According to some examples, the apparatus for replicating the packets 104 comprises a storage storing the list or the lists 202-1, ..., 202-p. The storage is an example for a means for providing the list or the lists 202-1, ..., 202-p.

The meta data 112 and the entries 202-11, ..., 202-1m, ..., 202-p1, ..., 202-pk of the lists or the entries of the single list are indicative of the egress interfaces, for that the apparatus for replicating packets 104 shall replicate the ingress packet 110.

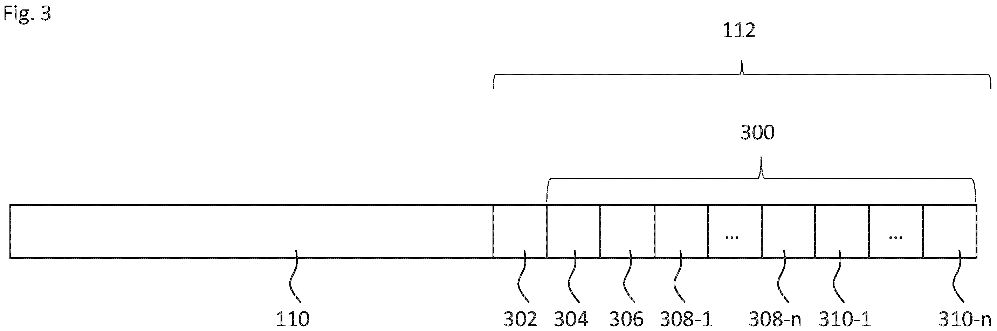

Figure 3 schematically depicts an exemplary ingress packet 110 and exemplary meta data 112.

According to some examples, the meta data 112 comprises a list identifier 302 that identifies the list that the apparatus for replicating packets 104 shall use.

The meta data 112 comprises a data structure 300.

According to some examples, the meta data 112 comprises an indication 304 indicating whether to allow sending a copy of the ingress packet 110 to the source of the ingress packet 110 or to inhibit sending of a copy of the ingress packet 110 to the source of the ingress packet 110.

According to some examples, the egress interfaces 108-1, 108-2, ..., 108-n are associated with a respective egress interface identification.

According to some examples, the meta data 112 comprises an ingress interface identification 306 for identifying an egress interface identification matching the ingress interface identification.

According to some examples, the meta data 112 comprises an indicator 308-1, ..., 308-n indicating for one egress interface to stop processing the list that the apparatus for replicating packets 104 shall use.

According to some examples, the meta data 112 comprises information 310-1, ..., 310-n indicative of a subset of egress interfaces from the list that the apparatus for replicating packets 104 shall use.

According to some examples, the indicator 308-1, ..., 308-n indicates for one egress interface for that the information 310-1, ..., 310-n indicates to replicate the packet, to stop processing the list that the apparatus for replicating packets 104 shall use.

According to some examples, the data structure 300 is provided for comprising the information 310-1, ..., 310-n.

According to some examples, the data structure 300 is provided for comprising the indication 304 as well.

According to some examples, the data structure 300 is provided for comprising the identification 306 and the indicator 308-1, ..., 308-n as well.

According to some examples, the data structure 300 is provided for comprising the list identifier as well.

The apparatus for replicating the packets 104 comprises a means for receiving the ingress packet 110. The means for receiving the ingress packet 110 comprises for example a buffer configured for storing the ingress packet 110.

According to some examples, the apparatus for replicating the packets 104 comprises a means for receiving the indication 304 indicating to inhibit sending of a copy of the ingress packet 110 to the source of the ingress packet 110. The means for receiving the indication 304 comprises for example a buffer configured for storing the indication 304.

According to some examples, the apparatus for replicating the packets 104 comprises a means for receiving the ingress interface identification 306. The means for receiving the ingress interface identification 306 comprises for example a buffer for storing the ingress interface identification 306.

According to some examples, the apparatus for replicating the packets 104 comprises a means for receiving the indicator 308-1, ..., 308-n. The means for receiving the indicator 308-1, ..., 308-n comprises for example a buffer for storing the indicator 308-1, ..., 308-n.

The apparatus for replicating the packets 104 comprises a means for receiving the information 310-1, ..., 310-n indicative of the subset of egress interfaces. The means for receiving the information 310-1, ..., 310-n comprises for example a buffer configured for storing the information 310-1, ..., 310-n indicative of the subset of egress interfaces.

The apparatus for replicating the packets 104 comprises a means for replicating the ingress packet 110 for the egress interfaces in the subset according to the received information 310-1, ..., 310-n. The means for replicating the ingress packet 110 comprises for example a buffer configured for storing the replicated packets. The means for replicating the ingress packet 110 comprises for example at least one processor and at least one memory storing instructions, that, when executed by the at least one processor, cause the apparatus for replicating the packets 104 to copy replicate the ingress packet 110 according to the received information 310-1, ..., 310-n.

According to some examples, the at least one memory stores instructions that, when executed by the at least one processor, cause the apparatus for replicating the packets 104 to copy the ingress packet 110 from the buffer storing the ingress packet 110 to the buffer configured for storing the replicated packet for the egress interface as indicated by the received information 310-1, ..., 310-n.

According to some examples, the at least one memory stores instructions that, when executed by the at least one processor, cause the apparatus for replicating the packets 104 to select the list according to the identifier of the list from the lists 202-1, ..., 202-p. The at least one processor and the at least one memory storing the instructions to select the list is an example for a means for selecting the list.

According to some examples, the at least one memory stores instructions that, when executed by the at least one processor, cause the apparatus for replicating the packets 104 to, upon receipt of the indication 304, inhibit replicating the ingress packet 110. The at least one processor and the at least one memory storing the instructions to inhibit replicating the ingress packet 110 is an example for a means for inhibiting replicating the ingress packet 110.

According to some examples, the at least one memory stores instructions that, when executed by the at least one processor, cause the apparatus for replicating the packets 104 to, upon receipt of the indication 304, inhibit searching in the list the egress interface identification matching the ingress interface identification 306. The at least one processor and the at least one memory storing the instructions to inhibit searching in the list is an example for a means for inhibiting searching in the list.

According to some examples, the at least one memory stores instructions that, when executed by the at least one processor, cause the apparatus for replicating the packets 104 to inhibit sending of the copy of the ingress packet 110 to the source of the ingress packet 110. The at least one processor and the at least one memory storing the instructions to inhibit sending of the copy is an example for a means for inhibiting sending of the copy.

According to some examples, the at least one memory stores instructions that, when executed by the at least one processor, cause the apparatus for replicating the packets 104 to inhibit replicating the ingress packet 110 for the egress interface associated in the list that is used for replicating the ingress packet 110 with the egress interface identification matching the ingress interface identification 306. The at least one processor and the at least one memory storing the instructions to inhibit replicating the ingress packet 110 for said egress interface is an example for a means for inhibiting replicating the ingress packet 110 for said egress interface.

According to some examples, the at least one memory stores instructions that, when executed by the at least one processor, cause the apparatus for replicating the packets 104 to sort the list depending on the received indicator 308-1, ..., 308-n to determine a sorted list. The at least one processor and the at least one memory storing the instructions to sort the list is an example for a means for sorting the list depending on the received indicator 308-1, ..., 308-n to determine a sorted list.

According to some examples, the sorted list comprises the egress interfaces of the list in an order, wherein the egress interfaces for that the received information 310-1, ..., 310-n indicates to replicate the packet are arranged at the beginning of the order.

According to some examples, the egress interface for that the indication 310-1, ..., 310-n indicates to stop processing is arranged in the order at the end of egress interfaces for that the received information 310-1, ..., 310-n indicates to replicate the packet followed in the order by the egress interfaces for that the received information 310-1, ..., 310-n indicates not to replicate the packet.

According to some examples, the means for replicating is configured for replicating the packet for the egress interfaces in the sorted list according to the order starting from the beginning and stopping after replicating the packet for that the indicator 308-1, ..., 308-n indicates to stop processing.

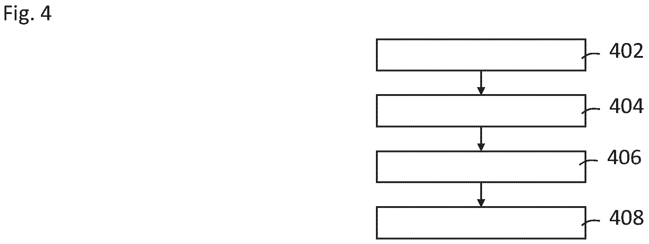

Figure 4 depicts a flow chart comprising steps of a method of replicating a packet for packet switching.

The method comprises a step 402.

The step 402 comprises providing at least one list comprising egress interfaces, e.g., the first list 202-1.

According to some examples, the step 402 comprises providing a plurality of lists, e.g., the lists 202-1, ..., 202-n. The lists in the plurality of lists may be associated with a respective list identifier, wherein the plurality of lists comprises the list.

The method comprises a step 404.

The step 404 comprises receiving a packet, e.g., the ingress packet 110.

The method comprises a step 406.

The step 406 comprises receiving information indicative of a subset of egress interfaces from the list, e.g., the information 310-1, ..., 310-n.

According to some examples, the step 406 comprises receiving information comprising an identifier of the list, e.g., the list identifier 302, and selecting the list according to the identifier of the list from the plurality of lists.

According to some examples, the list associates the egress interfaces in the list with a respective egress interface identification, and the step 406 comprises receiving an ingress interface identification, and inhibiting replicating the packet for the egress interface associated in the list with the egress interface identification matching the ingress interface identification.

According to some examples, the step 406 comprises receiving an indication indicating to inhibit sending of a copy of the packet to the source of the packet, e.g., the indication 304.

According to some examples, the step 406 comprises receiving an indicator, e.g., the indicator 308-1, ..., 308-n, indicating for one egress interface, for that the received information indicates to replicate the packet, to stop processing the list.

The method comprises a step 408.

The step 408 comprises replicating the packet for the egress interface or the egress interfaces in the subset according to the received information.

According to some examples, the step 408 comprises inhibiting replicating the packet upon receipt of the indication.

According to some examples, the step 408 comprises inhibiting searching in the list the egress interface identification matching the ingress interface identification upon receipt of the indication.

According to some examples, the step 408 comprises inhibiting replicating the packet for the egress interface associated in the list with the egress interface identification matching the ingress interface identification.

According to some examples, the method comprises sorting the list depending on the received indicator to determine a sorted list that comprises the egress interfaces of the list in an order. According to the order, the egress interfaces for that the received information indicates to replicate the packet are arranged at the beginning of the order. According to the order, the egress interface for that the indication indicates to stop processing is arranged in the order at the end of egress interfaces for that the received information indicates to replicate the packet. According to the order, the last egress interface that is arranged at the end is followed in the order by the egress interfaces for that the received information indicates not to replicate the packet.

According to some examples, the step 408 comprises replicating the packet for the egress interfaces in the sorted list according to the order starting from the beginning and stopping after replicating the packet for that the indicator indicates to stop processing.

According to some examples, the list identifier 302 comprises at least one bit. According to some examples, the indication 304 comprises at least one bit. According to some examples, the identification 306 comprises at least one bit. According to some examples, the indicators 308-1, ..., 308-n respectively comprise at least one bit. According to some examples, the information 310-1, ..., 310-n respectively comprises at least one bit.

According to some examples, the data structure 300 comprises a data field for the respective at least one bit.

The entries of the list are for example linked list entries. A linked list entry for example identifies an egress interface and linked list entry meta data associated with that entry.

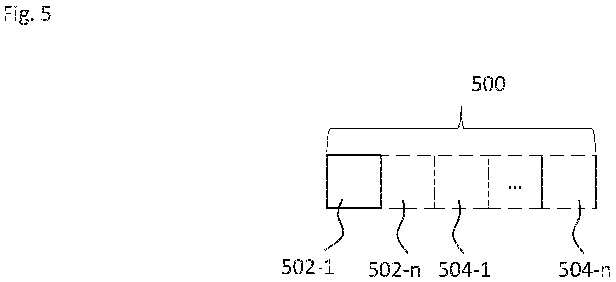

Figure 5 schematically depicts exemplary linked list entry meta data 500.

The linked list entry meta data 500 comprises flags 502-1, ..., 502-n and 504-1, ..., 504-n.

The method may comprise comparing the meta data 112 that is sent with the ingress packet 110 to the linked list entry meta data 500.

According to some examples, the indicators 308-1, ..., 308-n respectively comprises a flag.

According to some examples, the information 310-1, ..., 310-n respectively comprises a flag.

The method may comprise looking at the flags in order to determine whether to send out a copy of the ingress packet 110 for a specific entry of the list or to inhibit sending out a copy of the ingress packet 110 for the specific entry of the list.

The method may comprise comparing the flags of the linked list entry meta data 500 with the corresponding flags of the meta data 300.

The method may comprise sending the copy to the egress interface in case the flag in the linked list entry meta data for and the flag in the information provided in the meta data 112 for the ingress packet 110 both indicate to replicate the ingress packet 110 for this egress interface. The flags indicate that a copy shall be sent to an egress interface for example by a value of 1 (TRUE) and indicate that sending the copy shall be inhibited by a value of 0 (FALSE).

For example, the flags are ordered in the linked list entry meta data 500 and the meta data 112 in the same order. For example, for four egress interfaces the meta data 112 comprises for the information 310-1, ..., 310-4 the sequence 0001. For example, the linked list entry meta data 500 comprises for the four egress interfaces for the flags 504-1, ..., 504-4 corresponding to the information 310-1, ..., 310-4, the sequence 0101. This means the ingress packet 110 is inhibited for the first, the second, the fourth egress interface because not both flags are 1, and the ingress packet 110 is replicated for the third egress interface, because both flags are 1.

The method may comprise comparing the flags of the other linked list entry meta data 500 with the other corresponding flags of the meta data 300 alike.

## Claims

1. An apparatus (104) for replicating a packet for packet switching, wherein the apparatus (104) comprises a means for providing (402) a list (202-1) comprising egress interfaces, a means for receiving (404) the packet, a means for receiving (406) information (310-1, ..., 310-n) indicative of a subset of egress interfaces from the list (202-1), and a means for, according to the received information (310-1, **...,** 310-n), replicating (408) the packet for the egress interfaces in the subset.

2. The apparatus (104) according to claim 1, wherein the list (202-1) associates the egress interfaces (108-1, ..., 108-n) in the list (202-1) with a respective egress interface identification, wherein the apparatus (104) comprises a means for receiving (406) an ingress interface identification (306), and a means for inhibiting replicating the packet for the egress interface associated in the list (202-1) with the egress interface identification matching the ingress interface identification (306).

3. The apparatus (104) according to claim 2, wherein the apparatus (104) comprises a means for receiving (406) an indication (304) indicating to inhibit sending of a copy of the packet to the source of the packet, and a means for, upon receipt of the indication (304), inhibiting replicating (408) the packet or inhibiting searching in the list (202-1) the egress interface identification matching the ingress interface identification (306).

4. The apparatus (104) according to one of the preceding claims, wherein the apparatus (104) comprises a means for receiving (406) an indicator (308-1, ..., 308-n), wherein the indicator (308-1, ..., 308-n) indicates for one egress interface, for that the received information (310-1, ..., 310-n) indicates to replicate the packet, to stop processing the list (202-1).

5. The apparatus (104) according to claim 4, wherein the apparatus (104) comprises a means for sorting the list (202-1) depending on the received indicator (308-1, ..., 308-n) to determine a sorted list (202-1), wherein the sorted list (202-1) comprises the egress interfaces of the list (202-1) in an order, wherein the egress interfaces for that the received information (310-1, ..., 310-n) indicates to replicate the packet are arranged at the beginning of the order, wherein the egress interface for that the indication (310-1, ..., 310-n) indicates to stop processing is arranged in the order at the end of egress interfaces for that the received information (310-1, ..., 310-n) indicates to replicate the packet followed in the order by the egress interfaces for that the received information (310-1, ..., 310-n) indicates not to replicate the packet, wherein the means for replicating is configured for replicating the packet for the egress interfaces in the sorted list according to the order starting from the beginning and stopping after replicating the packet for that the indicator (308-1, ..., 308-n) indicates to stop processing.

6. The apparatus (104) according to one of the preceding claims, wherein the means for providing the list (202-1) is configured for providing a plurality of lists (202-1, ..., 202-p) associated with a respective list identifier, wherein the plurality of lists (202-1, ..., 202-p) comprises the list (202-1), wherein the information comprises an identifier (302) of the list (202-1), and wherein the apparatus (104) comprises a means for selecting the list (202-1) according to the identifier of the list from the plurality of lists (202-1, ..., 202-p).

7. A method of replicating a packet for packet switching, wherein the method comprises providing (402) a list (202-1) comprising egress interfaces, receiving (404) the packet, receiving (406) information (310-1, ..., 310-n) indicative of a subset of egress interfaces from the list (202-1), and, according to the received information (310-1, ..., 310-n), replicating (408) the packet for the egress interfaces in the subset.

8. The method according to claim 7, wherein the list (202-1) associates the egress interfaces (108-1, ..., 108-n) in the list (202-1) with a respective egress interface identification, wherein the method comprises receiving (406) an ingress interface identification (306), and inhibiting replicating the packet for the egress interface associated in the list (202-1) with the egress interface identification matching the ingress interface identification (306).

9. The method according to claim 8, wherein the method comprises receiving (406) an indication (304) indicating to inhibit sending of a copy of the packet to the source of the packet, and, upon receipt of the indication (304), inhibiting replicating (408) the packet or inhibiting searching in the list (202-1) the egress interface identification matching the ingress interface identification (306).

10. The method according to one of the claims 7 to 9, wherein the method comprises receiving (406) an indicator (308-1, ..., 308-n), wherein the indicator (308-1, ..., 308-n) indicates for one egress interface, for that the received information (310-1, ..., 310-n) indicates to replicate the packet, to stop processing the list (202-1).

11. The method according to claim 10, wherein the method comprises sorting the list (202-1) depending on the received indicator (308-1, ..., 308-n) to determine a sorted list (202-1), wherein the sorted list (202-1) comprises the egress interfaces of the list (202-1) in an order, wherein the egress interfaces for that the received information (310-1, ..., 310-n) indicates to replicate the packet are arranged at the beginning of the order, wherein the egress interface for that the indication (310-1, **...,** 310-n) indicates to stop processing is arranged in the order at the end of egress interfaces for that the received information (310-1, ..., 310-n) indicates to replicate the packet followed in the order by the egress interfaces for that the received information (310-1, ..., 310-n) indicates not to replicate the packet, wherein the method comprises replicating (408) the packet for the egress interfaces in the sorted list according to the order starting from the beginning and stopping after replicating the packet for that the indicator (308-1, ..., 308-n) indicates to stop processing.

12. The method according to one of the claims 7 to 11, wherein the method comprises providing a plurality of lists (202-1, ..., 202-p) associated with a respective list identifier, wherein the plurality of lists (202-1, ..., 202-p) comprises the list (202-1), wherein the information comprises an identifier (302) of the list (202-1), and wherein the method comprises selecting the list (202-1) according to the identifier of the list from the plurality of lists (202-1, ..., 202-p).

13. A data structure (300) for replicating a packet for packet switching, wherein the data structure (300) comprises information (310-1, ..., 310-n) indicative of a subset of egress interfaces from the list (202-1).

14. The data structure (300) according to claim 13,
wherein the data structure (300) comprises an indicator (308-1, ..., 308-n) indicating for one egress interface, for that the information (310-1, **...,** 310-n) indicates to replicate the packet, to stop processing the list (202-1).

15. The data structure (300) according to claim 13 or 14, wherein the data structure (300) comprises an ingress interface identification (306).
